# EUROPEAN PATENT APPLICATION

(11) **EP 2 353 890 A1**
(43) Date of publication of application: **10.08.2011**
(21) Application number: 10000946.3
(22) Date of filing: 29.01.2010
(51) Int. Cl.: B60C 25/138, G01M 17/02

(54) **Apparatus and method of determing geometrical dimensions of a tyre with optical sensors**

(71) Applicant: Snap-on Equipment Srl a unico socio, 42015 Correggio (RE) (IT)
(72) Inventor: Sotgiu, Paolo, 41199 Modena (IT)
(74) Representative: Eisenführ, Speiser & Partner

(57) **Abstract**

The invention relates to a method of determining geometrical dimensions of a tyre, especially of an inner surface of the tyre and/or a tyre bead, by contact-less sensing, wherein the tyre (12) is received in a receiving means (10), wherein at least one light beam is emitted onto a peripheral area of the tyre surface (23, 24), especially on an inner surface (23) of the tyre (12) and/or on a tyre bead (24), wherein the light beam reflected at the impingement area is detected and the directions of the emitted and reflected light beams are evaluated for determining the shape and/or position of the respective impingement area on the tyre (12). Furthermore, the invention relates to an apparatus for determining the geometrical dimensions of a tyre comprising at least one sensing device (22) and a computer-aided evaluation arrangement (32), wherein the evaluation arrangement (32) is suitable for determining the position of the location sensed by the light beam on the tyre surface (23, 24) from the directions of the emitted light beam and the reflected light beam.

## Description

The invention concerns a method of and apparatus for determining geometrical dimensions of a tyre, especially of an inner surface of the tyre and/or a tyre bead, by contact-less sensing. Furthermore, the invention concerns an apparatus for determining the geometrical dimensions of the tyre.

An apparatus is known from EP 1 995 083 receiving a vehicle wheel comprising a rim and a tyre. The tyre can be fitted to the rim or released from the rim by means of fitting or removal tools. A sensing device is provided sensing the radial outside surface of the rim. That ensures that the removal tool is kept at a given spacing from the surface of the rim in the removal operation. Thus, a damage of the rim surface by removal tool is prevented.

DE 23 33 200 shows an apparatus for detecting a tyre using X-rays. In order to conduct the inspection of the tyre, the tyre has to be inflated. The accommodation of an inflated tyre is difficult.

The problem of the present invention is to provide a method and an apparatus of the kind set forth in the opening part of this specification, in which the geometrical dimensions of a tyre, especially of an inner surface of the tyre and/or a tyre bead, are reliably determined and in particular a tyre bead is sensed.

This is achieved by a method according to the above mentioned kind, wherein the tyre is received in a receiving means, wherein at least one light beam is emitted onto a peripheral area of the tyre surface, especially on an inner surface of the tyre and/or on a tyre bead, wherein the light beam reflected at the impingement area is detected and the directions of the emitted and reflected light beams are evaluated for determining the shape and/or position of the respective impingement area on the tyre. According to the invention, the tyre surface is sensed in a contact-less manner for determining the geometrical dimensions of the tyre surface, especially of the inner surface of the tyre and/or of the tyre bead. The optical system which is preferably used is based on the principle of optical laser triangulation, also designated hereafter as triangulation method. Thereby, a sensing device with a light source, e.g. a laser source, is provided. A light beam is emitted onto the surface of the tyre, in particular onto the inner surface of the tyre. The light beam is moved in a planar plane and intersects the inner surface of the tyre in a plurality of impingement points which forms an impingement area on the surface of the tyre. The reflected light beams will be detected by a detector, the detector being for example a CCD device or a CMOS device. In dependence on the directions of the emitted and reflected light beams the spacings and thus positions of the individual impingement points sensed at the tyre surface can be determined. With the described method the tyre surface can be sensed in a contact-less manner. This method is conducted after the removal of the tyre from the rim with corresponding removal tools. With this method, the inner surface of the tyre and the tyre bead can be inspected and damages on important parts of the tyre, especially on the tyre bead, can be detected. The tyre bead serves for securely holding the tyre to the rim. Such inspection is necessary and important using ultra high performance (UHP) tyres or run flat tyres as fitting of these tyres are difficult because of the stiffness and the dimensions of these tyres. The method of determining geometrical dimensions can be conducted in changing over to summer tyres or to winter tyres. The peripheral area of the tyre surface is inspected, i.d. the tyre surface is sensed circumferentially.

The light beam is moved in a planar plane and intersects the inner surface of the tyre in a plurality of impingement points which forms an impingement area on the surface of the tyre. Instead of a light beam moved in a planar plan, alternatively, the emitted light beam is a planar light beam reflected on the tyre surface in a stripe-shaped impingement area. The planar light beam is emitted onto the tyre surface and intersects the rim surface in a plurality of impingement points along a stripe-shaped impingement area.

At least one light beam is preferably directed onto the tyre surface, the tyre being rotated about a stationary axis and/or the at least one light beam is rotated along the peripheral area of the tyre surface. Either the tyre is rotated through 360° in order to circumferentially sense the tyre surface and the light source emitting the light beam is stationary or the tyre is stationary and the light source emitting the light been, e.g. the sensing device, is rotated through 360° (i.d. along the peripheral area of the tyre) in order to circumferentially sense the tyre surface. Alternatively, the tyre and the light source emitting the light beam can be conducted rotatably.

According to an embodiment, the rotational angle of the tyre and/or of the emitted light beam is detected. Corresponding rotary angle signals of the rotary angle sensor are sent to an evaluation arrangement to which the electrical sensing signals from the sensing device are also sent. The evaluation arrangement evaluates the sensing signals and the rotary angle signals with computer aid and, ascertains the spatial positioning of the surfaces of the tyre with respect to a reference which is fixed in relation to the axis of rotation of the tyre and/or the sensing device.

Preferably, at least one light beam is emitted onto the tyre surface from one or more given positions. In dependence on the directions of the emitted and reflected light beams, the spacings and thus positions of the individual impingement points sensed at the tyre surface can be determined by the triangulation method.

At least a tyre bead of the tyre can be sensed with the at least one light beam. The tyre bead serves for securely holding the tyre to the rim. Therefore, the inspection of the tyre bead is essential.

Alternatively or additionally, at least an inner surface of the tyre is sensed with the at least one light beam. Bulges and/or depressions of the inner surface of the tyre which may influence the safety can be easily detected.

Furthermore, the invention relates to an apparatus for determining the geometrical dimensions of a tyre comprising at least one sensing device for sensing the tyre surface, especially an inner surface of the tyre and/or a tyre bead, the sensing device supplying electrical sensing signals, and a computer-aided evaluation arrangement for evaluation of the electrical sensing signals supplied by the at least one sensing device, wherein the at least one sensing device has at least one light source which emits light beam from at least a given position in at least a given direction onto the tyre surface, especially onto an inner surface of the tyre and/or onto a tyre bead, wherein at least one detector is provided which detects the direction of the light beam reflected by the tyre surface, wherein the evaluation arrangement is suitable for determining the position of the location sensed by the light beam on the tyre surface from the directions of the emitted light beam and the reflected light beam, and wherein a device for rotating the tyre about its axis or a device for rotating the emitted light beam around the axis of the tyre is provided. With respect to the advantages it is referred to the above mentioned explanations. The inner surface of the tyre can be sensed circumferentially in rotating the tyre and/or the at least one sensing device. For rotation of the tyre and/or the at least one sensing device corresponding devices are provided.

According to an embodiment, two sensing devices having the at least one light source and the at least one detector are provided for sensing the tyre surface. The sensing devices are arranged in such way that the whole inner surface of the tyre and/or tyre bead is sensed.

The inner surface of the tyre can be sensed circumferentially in rotating the tyre and/or the at least one sensing device.

The emitted light beam is for example a planar light beam reflected on the tyre surface in a stripe-shaped impingement area. Alternatively, the light beam is moved in a planar plane and intersects the inner surface of the tyre in a plurality of impingement points which forms an impingement area on the surface of the tyre.

A receiving means can be provided receiving the tyre, the receiving means comprising three rollings, each rolling being rotatably about an axis. The tyre is rotatably held in the receiving means. During rotation of the tyre the tyre surface is sensed.

According to the preferred embodiment, at least one drive is provided, the at least one drive driving one of the rollings. The powered rolling effects the rotation of the tyre.

Preferably, one of the rollings is removably to allow an insertion of the tyre. In particular, the removably rolling is pivoted or flapped from an initial position, in which it engages the bearing surface of a tyre received in the receiving means, in a position, in which it allows the removal of the tyre from the receiving means and/or the insertion of a further tyre in the receiving means.

The evaluation arrangement is suitable for determining the positions of the respective locations which are sensed on the tyre surface from the directions of the light beam emitted by the light source and the light beam reflected at the tyre surface by means of triangulation. Signals from the sensing device and if applicable from the rotary angle sensor are sent to the evaluation arrangement. The evaluation arrangement evaluates the sensing signals with computer aid.

Preferably, a rotary angle sensor is provided detecting the respective rotary angle position of the tyre and/or the at least one sensing device and supplies a corresponding electrical signal to the evaluation arrangement. The rotary angle sensor detects the rotation of the tyre and/or the sensing device. Corresponding rotary angle signals of the rotary angle sensor are sent to the evaluation arrangement to which the electrical sensing signals from the sensing device are also sent. The evaluation arrangement evaluates the sensing signals and the rotary angle signals with computer aid and, ascertains the spatial positioning of the surfaces of the tyre with respect to a reference which is fixed in relation to the axis of rotation of the tyre and/or of the at least one sensing device.

The light source of the at least one sensing device and the detector of the at least one sensing device can be pivotably synchronously about a common axis and an electrical signal proportional to the respective pivot angle can be fed to the evaluation arrangement for emit a single light beam in a planar plane.

Alternatively, the at least one light source of the at least one sensing device and the detector of the at least one sensing device are positioned stationary, wherein the emitted light beam is a planar or sheet-shaped light beam.

Preferably, a control device is connected to the evaluation arrangement, the control device comparing the sensed values with set values. Thereby, the set values can be stores in a store or can be entered by an operator. The set values specify for various types of tyres the set contours of the inner surface of the tyres. The sensed values are compared with the set values and if the sensed values extremely diverge from the set values, the operator gets a signal that the sensed tyre does not fulfil the set value and should not be mounted to a rim.

The invention will be described in greater detail herein after by means of embodiments by way of example with reference to the Figures in which:
- Figure 1: shows a first embodiment of the invention with an apparatus according to the invention comprising a tyre and a sensing device; and
- Figure 2: shows a second embodiment of the invention with an apparatus according to the invention comprising a tyre and two sensing devices.

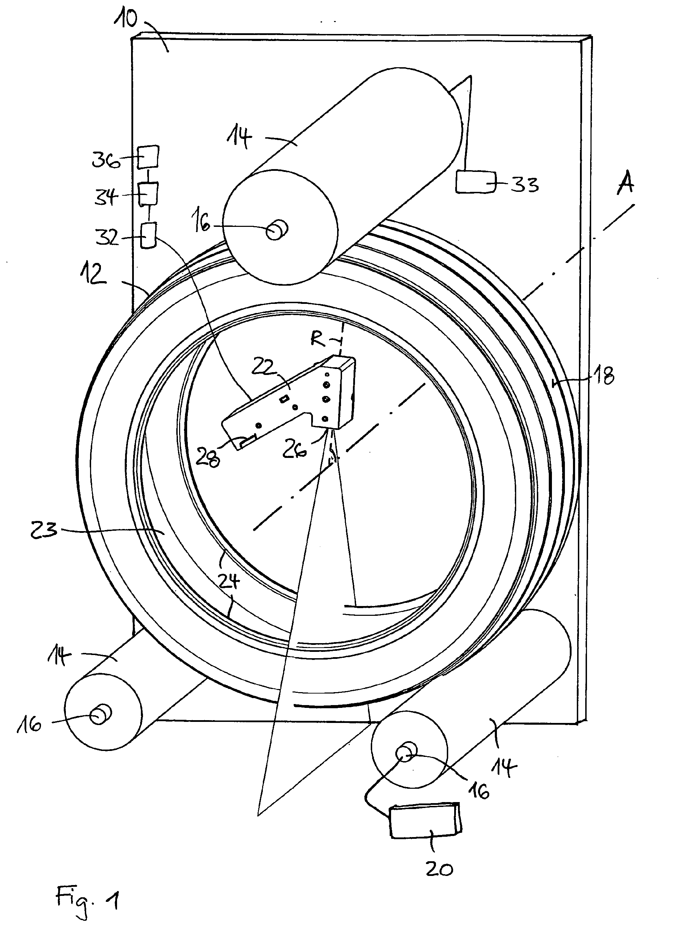

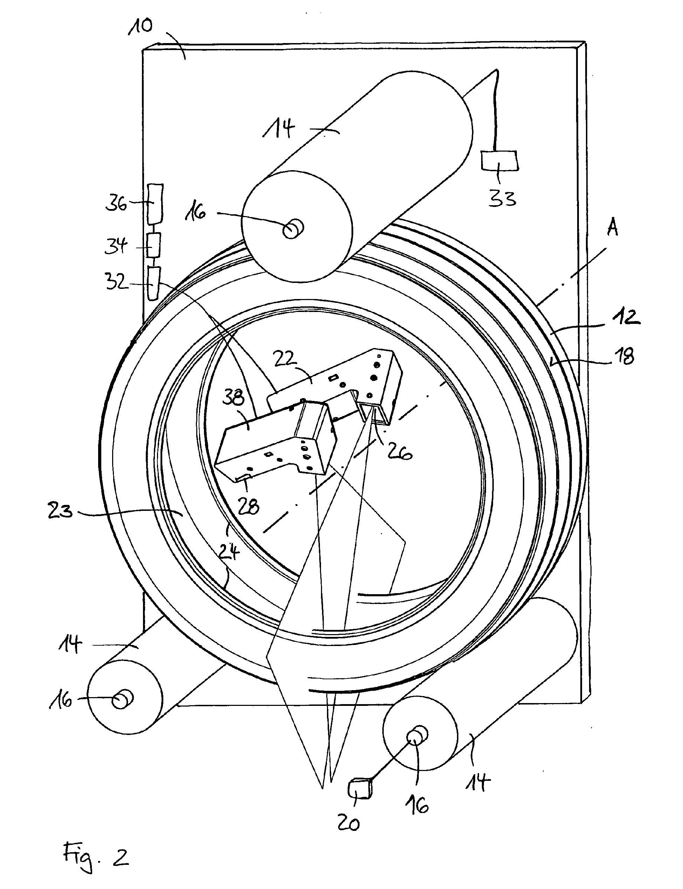

The illustrated embodiments include a receiving means 10 in which a tyre 12 can be positioned. The tyre receiving means 10 comprises three rollings 14. Each rolling 14 is pivotably about an axis 16. In the position in which the tyre 12 is received in the receiving means 10, the rollings 14 engage a bearing surface 18 of the tyre 12 (see Figs. 1 and 2). One of the rollings 14 is driven by a drive 20, the drive 20 being schematically shown in Figures 1 and 2. The drive 20 drives the rolling 14 and thereby the tyre 12 about its axis A of rotation as it engages the bearing surface 18 of the tyre 12. According to the embodiments as shown in the Figures, the rolling 14 which is driven by the drive 20 is the one which is arranged on the right side beneath the received tyre 12, the description of the direction being adapted to the embodiments shown in the Figures. Thus, the description of the direction does not limit the scope of protection.

One of the rollings 14 is removably to allow removal and insertion of the tyre 12. In particular, one rolling 14 can be pivoted or flapped from an initial position, in which it engages the bearing surface 18 of the tyre 12 received in the receiving means 10, in a position in which it allows the removal of the tyre 12 from the receiving means 10 and the insertion of a further tyre 12 in the receiving means 10. After the insertion of the tyre 12 in the receiving means, the removable rolling 14 is pivoted or flapped in its initial position, which is shown in the Figures, in which it engages the bearing surface 18 of the tyre 12. In this position, each rolling 14 engages the bearing surface 18 of the tyre 12. Then, the determination of geometrical dimensions of the tyre 12 can be conducted. According to the shown embodiments, rolling 14 which is arranged above the other rollings 14 is the removable one.

According to the first embodiment, one sensing device 22 is provided with which it is possible to implement contact-less and in particular optical sensing of the tyre 12, especially of an inner surface 23 of the tyre 12 and of a tyre bead 24. Additionally, it is possible to sense geometrical dimensions of the tyre 12. The sensing device 22 sensing the inner surface 23 of the tyre 12 and the tyre bead 24 is positioned on the radial route R of the tyre 10 and is movably along the radial route R which allows to sense tyres with different section width.

The principle of such contact-less sensing rests on a triangulation method such as described hereafter. The sensing device 22 has a light source 26, e.g. a laser source, comprising a pattern generator, e.g. an optical line generator made with a cylindrical lens, which emits a planar light beam shaped in a sheet of light by the pattern generator onto the surface of the tyre 12, especially the inner surface 23 of the tyre 12 or the tyre bead 24, in one or more given directions and intersects the inner surface 23 of the tyre 12 or the tyre bead 24 in a plurality of impingement points which forms a stripe-shaped impingement area on the surface of the tyre 12. The impingement points belong to both the impinged surface and the sheet of light. At each of these impingement points, the light beam is scattered in a plurality of light rays or beams that are reflected.

At least a plurality of reflected light beams will be then detected by a photosensitive detector 28 (schematically shown), e.g. an area image sensor that may be either a CCD device or preferably a CMOS device. Before being detected the reflected light beams are concentrated by a lens (not shown), e.g. a single, glass, plan-convex lens that may be associated with an optical band-pass filter, into a point projected onto the focal plane of the photosensitive detector 28. In order to improve measurement accuracy, each projected point has a position determined preferably with a sub-pixel resolution rather than the physical pixel one. That determination can be achieved by several well-known detection techniques, such as the Gaussian approximation, centroid or centre of mass algorithms, or parabolic estimator. Relationship between the position in a three dimensional coordinate system of an impingement point, expressed in unit of length of the international system of units (SI), and the position in a two dimensional coordinate system of the corresponding projected point, expressed preferably in sub-pixel, is defined by calibration using a reverse transform. Calibration can be carried out either by using the so-called model-based calibration based on the geometric camera model approach or by using the direct or black-box calibration based on a polynomial interpolation such as the cubic spline interpolation. The spacings and thus positions of the individual impingement points sensed at the tyre can then be determined in dependence on the directions of the emitted and reflected light beams. It should be noted that the geometric optical setup of the optical sensing device 22 can be designed in a way that the Scheimpflug principle is respected in order to avoid excessive defocusing at different distances, and that the background subtraction can be implemented in order to reduce the system sensitivity to ambient light. Moreover, both the light power and the exposure time of the photosensitive detector 28 can be controlled by the system in order to achieve accurate measurements in all the environmental conditions, such as sunlight, artificial light, shiny chromed surfaces, black dusty surfaces.

Instead of using a planar light beam shaped in a sheet of light, alternatively, the light bean can be a light beam and moved in a planar plane. Such a light beam intersects the surface of the tyre 12 in a plurality of impingement points which forms an impingement area on the surface of the tyre 12.

The signals of the sensing device 22 are sent to an evaluation arrangement 32 (schematically shown) which evaluates the received signals.

In the operation, the tyre 12 is inserted into the receiving means 10. The rollings 14 engage the outer surface, i.e. the bearing surface 18, of the tyre 12. The sensing device 22 is positioned such that it is able to sense the inner surface 23 of the tyre 12 and the tyre bead 24 of the tyre 12, e.g. it is adapted to the present section width of the tyre in moving along the radial route R. Then, the drive 20 drives one of the rolling 14. Thus, the tyre 12 is rotated about the axis A of rotation. The rollings 14 which are not driven by the drive 20 are rotated which reduces the friction between the bearing surface 18 of the tyre 12 and the rollings 14. When the tyre 12 is rotated about the axis A of rotation through at least 360°, the shapes and the spatial positionings of the tyre 12 with respect to a reference which is fixed in relation to the machine, for example with respect to the axis A of rotation about which the tyre 12 is rotated are determined in a horizontal plane.

Furthermore, a rotary angle sensor 33 (schematically shown) can be provided for ascertain the respective rotary angles. The corresponding rotary angle signals are sent to the evaluation arrangement 32 (schematically shown) to which the electrical sensing signals from the sensing device 22 are also sent. The evaluation arrangement 32 evaluates the sensing signals and the rotary angle signals with computer aid and, as already explained, ascertains the spatial positioning of the surfaces of the tyre 12 with respect to the reference which is fixed in relation to the axis A of rotation of the tyre 12.

The sensed values are compared with set values to determine the condition of the inner surface 23 of the tyre 12 and of the tyre bead 24. For that purpose, a control device 34 (schematically shown) is connected to the evaluation arrangement 32 and to a store 36 (schematically shown), for example in the form of a database, in which, for various types of tyres, the set contours of the tyre beads 24 and/or the inner surfaces 23 are stored. The control device 34 compares the sensed values with the set values in the store 36. If the sensed values extremely diverge from the set value, the operator gets a signal that the sensed tyre 12 do not fulfil the set value and therefore should not be mounted to a rim.

After the sensing of the tyre 12, one of the rollings 14 is removed, especially is pivoted or flapped from the initial position in which it engages the bearing surface 18 of the tyre 12 received in the receiving means 10 in a position in which it allows the removal of the tyre 12 from the receiving means 10 and the insertion of a further tyre 12 in the receiving means 10. After the removal of the rolling 14, the tyre 12 can be easily taken out of the receiving means 10. Then, a further tyre 12 is inserted into the receiving means 10, the removable rolling 14 is pivoted or flapped in its initial position in which it engages the tyre 12 and the determination of geometrical dimensions of the tyre can start again.

Alternatively, the tyre 12 can be positioned stationary and the sensing device 22 can be rotatably to sense the whole inner surface of the tyre 12.

In Figure 2, a second embodiment of the method of determining geometrical dimensions of a tyre and the apparatus is shown. The second embodiment differs from the first embodiment in that a second sensing device 38 is provided. The first and second sensing devices 22, 38 are arranged offset of the tyre layer and inclined to the tyre layer in such a way that each sensing device may sense the opposite part of the inner surface 23 of the tyre 12. Because of the inclined positioning of the sensing devices 22, the inner surface 23 of the tyre 12 can be sensed.

## Claims

1. Method of determining geometrical dimensions of a tyre, especially of an inner surface of the tyre and/or a tyre bead, by contact-less sensing, wherein the tyre (12) is received in a receiving means (10),
wherein at least one light beam is emitted onto a peripheral area of the tyre surface (23, 24), especially on an inner surface (23) of the tyre (12) and/or on a tyre bead (24),
wherein the light beam reflected at the impingement area is detected and the directions of the emitted and reflected light beams are evaluated for determining the shape and/or position of the respective impingement area on the tyre (12).

2. Method according to claim 1,
wherein the emitted light beam is a planar light beam reflected on the tyre surface (23, 24) in a stripe-shaped impingement area.

3. Method according to claim 1 or claim 2,
wherein at least one light beam is directed onto the tyre surface (23, 24), the tyre (12) being rotated about an axis (A) and/or the at least one light beam is rotated along the peripheral area of the tyre surface (23, 24).

4. Method according to one of the preceding claims,
wherein at least one light beam is emitted onto the tyre surface (23, 24) from one or more given positions.

5. Method according to one of the preceding claims,
wherein at least a tyre bead (24) of the tyre (12) is sensed with the at least one light beam.

6. Method according to one of the preceding claims,
wherein at least an inner surface (23) of the tyre (12) is sensed with the at least one light beam.

7. Apparatus for determining the geometrical dimensions of a tyre comprising at least one sensing device (22) for sensing the tyre surface (23, 24), especially an inner surface (24) of the tyre (12) and/or a tyre bead (24), the sensing device (22) supplying electrical sensing signals, and
a computer-aided evaluation arrangement (32) for evaluation of the electrical sensing signals supplied by the at least one sensing device (22),
wherein the at least one sensing device (22) has at least one light source (26) which emits light beam from at least a given position in at least a given direction onto the tyre surface (23, 24), especially onto an inner surface (23) of the tyre (12) and/or onto a tyre bead (24),
wherein at least one detector (28) is provided which detects the direction of the light beam reflected by the tyre surface (23, 24),
wherein the evaluation arrangement (32) is suitable for determining the position of the location sensed by the light beam on the tyre surface (23, 24) from the directions of the emitted light beam and the reflected light beam, and wherein a device (14) for rotating the tyre (12) about its axis or a device for rotating the emitted light beam around the axis of the tyre (12) is provided.

8. Apparatus according to claim 7,
wherein two sensing devices (22, 38) having the at least one light source (26) and the at least one detector (28) are provided for sensing the tyre surface (23, 24).

9. Apparatus according to claim 7 or claim 8,
wherein the emitted light beam is a single light beam.

10. Apparatus according to claim 7 or claim 8,
wherein the emitted light beam is a planar light beam.

11. Apparatus according to one of the preceding claims,
wherein a receiving means (10) is provided receiving the tyre (12), the receiving means (10) comprising three rollings (14), each rolling (14) being rotatably about an axis (16).

12. Apparatus according to one of the preceding claims,
wherein at least one drive (20) is provided, the at least one drive (20) driving one of the rollings (14).

13. Apparatus according to one of the preceding claims,
wherein one of the rollings (14) is removably to allow an insertion of the tyre (12).

14. Apparatus according to one of the preceding claims,
wherein the evaluation arrangement (23) is suitable for determining the positions of the respective locations which are sensed on the tyre surface (23, 24) from the directions of the light beam emitted by the light source (26) and the light beam reflected at the tyre surface (23, 24) by means of triangulation.

15. Apparatus according to one of the preceding claims,
wherein a rotary angle sensor (33) is provided detecting the respective rotary angle position of the tyre (12) and supplies a corresponding electrical signal to the evaluation arrangement (32).

16. Apparatus according to one of the preceding claims,
wherein a control device (34) is connected to the evaluation arrangement (32), the control device (34) comparing the sensed values with set values.
